# EUROPEAN PATENT APPLICATION

(11) **EP 4 538 454 A1**
(43) Date of publication of application: **16.04.2025**
(21) Application number: 23203639.2
(22) Date of filing: 13.10.2023
(51) Int. Cl.: D21H 19/20, D21H 19/58, C08L 33/06, D21H 17/34, D21H 21/16

(54) **WATER-, OIL-, GREASE-BARRIER FOR PAPER, CARDBOARD AND TEXTILE**

(71) Applicant: Archroma IP GmbH, 4153 Reinach (CH)
(72) Inventor: MAYER DE OLIVEIRA, Jorge, Suzano (BR); CORPET, Damien Julien, Oslon (FR)
(74) Representative: Wallinger Ricker Schlotter Tostmann

(57) **Abstract**

A composition for providing water-, and/or oil-, and/or grease-resistant properties to a substrate, its preparation and application as well as therefrom substrates and articles, as for example food containers, plates, straws, bags (from paper and textile), cloths and bowls. It was found that substrates treated with said composition possess improved properties in terms of water-, grease- and oil-resistance even after subsequent folding steps as for example in following folding steps to obtain food-containers.

## Description

### FIELD OF THE INVENTION

The invention relates to a composition comprising a copolymer comprising styrene units and acrylic ester units, a styrene maleic anhydride copolymer, and an elastomer, the manufacturing method and use of this composition for providing oil-barrier and/or water-barrier and/or grease-barrier properties to a substrate like paper, cardboard or textile.

### BACKGROUND OF THE INVENTION

Packaging has become an essential element in food purchases. The food is packed with the aim of being transported and stored. The packaging of food products is part of the marketing and distribution process.

The principal roles of food packaging are to protect food products from outside influences and damage. Plastics are the most common and most wide-ranging materials used for food packaging. Of the plastics used food packaging, polyolefins and polyester are the most common materials.

In recent years, as a result of a global environmental concern, plastic pollution has attracted worldwide attention. Plastic wastes not only disrupt ecosystems and biodiversity, but they also threaten human life and health. Therefore, packaging industry must move out to plastic packaging for more recyclable solution.

Following this trend, paper and paperboard packaging has become an alternative to this increasing demand of a sustainable and more environmentally friendly material and in this way the development of better solutions for a renewable, recyclable packaging.

Although paper and paperboard are an alternative to this demand of a more sustainable packaging materials, they don't have the needed barrier properties to provide protection against water, grease, oil and other substances. Paper and paperboard have very low barrier properties, as the material is very porous and thus having a high permeability. Paper and paperboard consist of cellulosic fibres, extracted from trees, combined with additives to make a continuous matted web, and thus forming the structure of the material. Paperboard is a relatively thicker and heavier material than paper. It is widely used as secondary packaging that is not generally in direct contact with the food. Its main use is for packaging and containers in the form of boxes.

To be a viable replacement, however, the barrier properties of paperboard need to be improved. The first step has been to develop paper and textile-based packaging using fibers treated with fluorochemicals. But fluorochemicals are now under pressure, as suspected to be persistent in the environment. There is still a need for a more sustainable solution than fluorochemicals. Polyethylene (PE) has also dominated as a barrier coating in packaging applications, due to its properties, especially to provide water resistance. However, packages coated with PE may be challenging to recycle at a standard recycling facility. Another concern is that PE coatings may contaminate fibers during the repulping process, prohibiting the fiber in this way from being recycled.

On the other side, for oil and grease resistance, early barrier coatings for food packaging were made from synthetic polymeric chemicals known as per- and polyfluoroalkyl substances (PFAS). PFAS are a diverse class of compounds characterized by having a hydrophobic, fluorine-saturated carbon chain joined to a hydrophilic functional group. This structure gives PFAS the ability to repel both water and fat readily. However, PFAS can't be separated from the paper easily, which means the paper can't be recycled or repulped. Besides this restriction, the whole family of compounds has also been shown to have harmful effects on human health.

Paper and Textile industries has been trying, without success until now, surface treatments using waxes, acrylic copolymers and mixtures of both; but these compositions are known to show weakness after folding and significant loss of their barriers properties. Low Tg acrylate copolymers have been tested in such applications, but their use is very limited today due to the stickiness and blocking problems created by the low Tg.

Today, on the market, there is still a need to find a replacement for plastic, a solution which keeping enough resistance to water, to oil and grease, even after folding.

### OBJECTS OF THE INVENTION

It is therefore the object of the invention to provide a composition which meets the above defined needs of the paper and textile industry in terms of water-, oil-, and/or grease resistant properties while no PFAS are used.

### SUMMARY OF THE INVENTION

The inventors discovered that the composition according to the invention provides improved water-, grease- and oil-resistance after being applied onto the surface of a suitable substrate.

Further, it was found that said resistances provided to the substrates treated with the composition according to the invention better withstand folding processes compared to coatings known in the prior art, i.e. said substrates showed satisfying resistances even after subsequent folding steps.

Hence, the present composition is advantageous since after applying to substrates subsequent folding steps may be performed without loss of the resistance properties.

Accordingly, the object is solved by the composition for providing water-, and/or oil-, and/or grease-resistant properties to a substrate, comprising at least components (A), (B) and (C), wherein is at least one copolymer comprising the following monomer units (A1) at least one monomer selected from styrene, methyl methacrylate, (meth)acrylonitrile, α-methyl styrene or mixtures thereof; and (A2) at least one monomer comprising acrylic acid ester units; (B) is at least one styrene maleic anhydride copolymer, and (C) is at least one elastomer.

Further it is possible that in the composition according to the invention the at least one monomer (A1) is present in an amount of 25.0 to 60.0 wt%, and/or the at least one monomer (A2) is present in an amount of 40.0 to 75.0 wt%, optionally wherein one or more further monomers (A3) may be present the copolymer in an amount of at most 5 wt%, based on the total amount of component (A) (=100% by weight).

Further it is possible that in the composition according to the invention the at least one monomer (A2) is selected from 2-ethyl-hexyl acrylate, butyl (meth)acrylate, ethyl (meth)acrylate, methyl acrylate or a mixture thereof.

Further it is possible that in the composition according to the invention the one or more further monomers (A3) are selected from (meth)acrylamide, (meth)acrylic acid, 1,3-butylene glycol dimethacrylate, 1,4-butylene glycol dimethacrylate, diethylene glycol dimethacrylate, dipropylene glycol dimethacrylate, divinyl benzene, ethylene glycol dimethacrylate, itaconic acid, N-methylol(meth)acrylamide, 4-methyl-1,4-pentanediol dimethacrylate, propylene glycol dimethacrylate, trivinyl benzene, or mixtures thereof.

Further it is possible that in the composition according to the invention component (A) is present in an amount in the range of from 30 wt% to 90 wt%; component (B) is present in an amount in the range of from 2.0 wt% to 30.0 wt%; component (C) is present in an amount in the range of from 1.0 wt% to 42.0 wt%; wherein the total dry wt% of the components (A), (B) and (C) add up to100 wt%.

Further it is possible that in the composition according to the invention component (C) is selected from the group ethylene/vinyl acetate, polybutadiene, natural latexes, synthetic latexes, styrene-butadiene emulsions, or mixtures thereof; preferably wherein component (C) is natural latex or polybutadiene or mixtures thereof.

Further it is possible that in the composition according to the invention the composition can comprise at least one further component selected from non-ionic surfactant, ionic surfactant, pH adjusting agent, preservative, dye, pigment, defoamer, thickener, waxes, wetting agent, plasticizers, or combinations thereof.

Further it is possible that in the composition according to the invention the composition is a dry composition, preferably a powder or a granulate; or wherein the composition is a liquid composition comprising a solvent, such as an organic solvent or water, preferably wherein the composition is an aqueous emulsion, an aqueous suspension, an aqueous solution, an aqueous slurry or a mixture thereof.

Further according to the invention is a method of manufacturing the composition according to the invention comprising at least the following steps a) and b): a) Performing sub-steps i,. ii., optionally iii.: i.) Providing component (B) to a first reaction area; ii.)

Providing at least the monomers (A1) and (A2) to a second reaction area to obtain a monomer mixture; optionally combining the monomer mixture in the second reaction area with the mixture in the first reaction area; and copolymerizing said monomer mixture to obtain component (A); or provide component (A) directly; iii.) optionally mixing the composition obtained in step i. and/or the composition obtained in step ii. to provide a first copolymer mixture; b) Addition of component (C) to the first copolymer mixture obtained in step a); wherein optionally in any of steps a)i., a)ii., a)iii. or b) one or more additional components may be added to the respective mixtures.

Further according to the invention is the use of the composition according to the invention or as manufactured according to the method according to the invention as oil-barrier and/or grease-barrier and/or water-barrier on a substrate; preferably, wherein the substrate is a cellulose based substrate, preferably paper or cardboard, or a substrate based on synthetic polymers, like nylon; or a substrate based on natural material, like wool; or a mixture of two or more of these substrates thereof.

Further according to the invention is a coated substrate, wherein the coat of the substrate comprises or consists of the composition according to the method according to the invention or as manufactured according to the method according to the method according to the invention; preferably wherein the substrate is a cellulose based substrate, preferably paper or cardboard, or a substrate based on synthetic polymers, like nylon; or a substrate based on natural material, like wool; or a mixture of two or more of these substrates thereof.

Further it is possible that the coated substrate according to the invention, further comprises an overcoat selected from humidity barriers, oxygen barriers, heatsealings, gas barriers, esthetic overcoatings such as printing, varnish or to provide gloss, or combinations thereof.

Further according to the invention is a method of manufacturing a coated substrate according to the invention comprising the following steps: I) applying the composition according to the invention or as manufactured according to the method according to the invention onto a substrate; II) drying the composition according to the invention or as manufactured according to the method according to the invention on the substrate.

Further it is possible that in the manufacturing method of an article comprising or consisting of the coated substrate according to the invention or as manufactured according to the method according to the invention, the coated substrate is subjected to measures selected from the group comprising cut, fold, gluing, curing, dyeing, or combinations thereof.

Further according to the invention is an article comprising or consisting of the coated substrate according to the invention or as manufactured according to the method according to the invention, or article manufactured according to the method according to the invention, wherein the article is a food container, plate, straw, bags, bowls, cloths, bags (made from paper or textile).

### DETAILED DESCRIPTION OF THE INVENTION

The invention relates to a composition for providing water-, and/or oil-, and/or grease-resistant properties to a substrate, comprising at least components (A), (B) and (C), wherein
(A) is at least one copolymer comprising the following monomer units
   (A1) at least one monomer selected from styrene, methyl methacrylate, (meth)acrylonitrile, α-methyl styrene or mixtures thereof; and
   (A2) at least one monomer comprising acrylic acid ester units;
(B) is at least one styrene maleic anhydride copolymer, and
(C) is at least one elastomer.

The term "water-, and/or oil- and/or grease-resistance" refers to the properties of a substrate to withstand the absorption of water, grease, and/or oil into the fiber-matrix of said substrate, and thus, a loss of its stability and shape among other mechanical properties, when in direct contact with said substances.

The term "substrate" refers to any material which shall be provided with a water-, and/or oil-, and/or grease-resistance barrier. The material of the substrate can be selected from a cellulose-based material or a material based on synthetic polymers or any other natural based material, or a mixture thereof. Suitable substrates are for example but not limited to papers, cardboards, non-wovens or textiles. It is possible that substrates comprise or consist of cellulose fibers and/or synthetic fibers and/or fibers of other natural origin. Suitable examples are but not limited to cotton, polyesters, polyamides, silk, wool, or mixtures thereof. It is possible that substrate thickness varies in broad boundaries, i.e. the area weight of the substrates to be treated with the composition according to the invention can be in the range of from 20 g/m² to 500 g/m², or from 30 g/m² to 400 g/m².

In addition, it is possible that the substrate is a thin paper having an area weight of from 30 g/m² to 80 g/m², or a thick paper having an area weight of from 80 g/m² to 110 g/m².

It is further possible that the substrate is a cardboard such as a board liner having an are weight of 110 g/m² to 180 g/m², or a thick board having an area weight of from 180 g/m² to 400 g/m².

It is also possible that the substrate is a non-woven having an are weight of from 50 g/m² to 100 g/m².

Further, it is possible that the substrate is a textile such as but not limited to a cellulose-based textile, a synthetic fiber-based textile or mixture thereof.

Further, it is possible that the substrate may or may not be (pre-)treated in any other process known to the prior art.

The term "(pre-)treated" is not meant to be limiting the invention to be used as part of another process. Although it is possible to integrate the invention into any kind of process for treating substrates in order to improve their water-, oil- or grease-resistance.

The composition according to the invention comprises at least one copolymer as component (A) comprising or consisting of at least the monomer units (A1) and (A2).

The term "copolymer" refers to any modified or unmodified, branched or unbranched polymer comprising or consisting of two or more monomer units which differ from each other.

The term "monomer" refers to a molecule being able to react with the same and/or different monomers molecules to form larger polymer chains or three-dimensional networks in polymerization reactions.

The at least one monomer (A1) of component (A) of the composition according to the invention comprises or consists of styrene, methyl methacrylate, (meth)acrylonitrile, α-methyl styrene, or mixtures thereof. Preferred monomers (A1) are styrene, methyl methacrylate, acrylonitrile or mixtures thereof.

The at least one monomer (A1) is present in the at least one copolymer (component (A)) in an amount of at least 25.0 wt%, or at least 30.0 wt%, or at least 35.0 wt%, or at most 60.0 wt%, or at most 50.0 wt% or at most 45.0 wt%, or from 25.0 wt% to 60.0 wt%, or from 30.0 wt% to 60.0 wt%, or from 30.0 wt% to 50.0 wt%, or from 30 wt% to 45 wt%, or from 35 wt% to 50 wt%, wherein the wt% are based on the total weight of the copolymer comprising components (A1) and (A2) equaling 100 wt%.

The at least one monomer (A2) of component (A) of the composition according to the invention comprises or consists of acrylic acid ester units.

It is possible that the at least one monomer (A2) is selected from the group consisting of 2-ethyl-hexyl acrylate, butyl (meth)acrylate, ethyl (meth)acrylate, methyl acrylate or a mixture thereof. Preferred monomers (A2) are selected from butyl acrylate, 2-ethyl-hexyl-acrylate, or a mixture thereof.

The at least one monomer (A2) can be present in the at least one copolymer (component (A)) in an amount of at least 40.0 wt%, or at least 50.0 wt%, or at least 55.0 wt%, or at most 75.0 wt%, or at most 70.0 wt% or at most 65.0 wt%, or from 40.0 wt% to 75.0 wt%, or from 50.0 wt% to 75.0 wt%, or from 40 wt% to 70 wt% or from 50.0 wt% to 70.0 wt%, or from 50.0 wt% to 65.0 wt%, or from 55 wt% to 70 wt%, wherein the wt% are based on the total weight of the copolymer comprising components (A1) and (A2) equaling 100 wt%.

It is also possible that in case the at least one monomer (A1) comprises or consists of a methyl methacrylate, the at least one monomer (A2) is a different acrylic monomer.

Further, it is possible that component (A) comprises or consists of styrene (monomer A1) and 2-ethylhexylacrylate (monomer A2).

It is further possible that component (A) comprises or consists of 25.0 wt% to 60.0 wt% of styrene (monomer A1) and 40.0 wt% to 75.0 wt% of 2-ethylhexylacrylate (monomer A2), wherein the wt% are based on the total weight of the copolymer comprising components (A1) and (A2) equaling 100 wt%.

In addition, it is possible that component (A) comprises or consists of styrene (monomer A1) and butylacrylate (monomer A2).

Further, it is possible that component (A) comprises or consists of 25.0 wt% to 60.0 wt% of styrene (monomer A1) and 40.0 wt% to 75.0 wt% of butylacrylate (monomer A2), wherein the wt% are based on the total weight of the copolymer comprising components (A1) and (A2) equaling 100 wt%.

It is further possible that component (A) comprises or consists of 25.0 wt% to 60.0 wt% of methyl methacrylate (monomer A1) and 40.0 wt% to 75.0 wt% of 2-ethylhexylacrylate (monomer A2), wherein the wt% are based on the total weight of the copolymer comprising components (A1) and (A2) equaling 100 wt%.

In addition, it is possible that component (A) comprises or consists of methyl methacrylate (monomer A1) and butylacrylate (monomer A2).

Further, it is possible that component (A) comprises or consists of 25.0 wt% to 60.0 wt% of methyl methacrylate (monomer A1) and 40.0 wt% to 75.0 wt% of butylacrylate (monomer A2), wherein the wt% are based on the total weight of the copolymer comprising components (A1) and (A2) equaling 100 wt%.

Further, it is possible that component (A) comprises or consists of styrene (monomer A1) and 2-ethylhexylacrylate (monomer A2).

It is further possible that component (A) comprises or consists of 25.0 wt% to 60.0 wt% of acrylonitrile (monomer A1) and 40.0 wt% to 75.0 wt% of 2-ethylhexylacrylate (monomer A2), wherein the wt% are based on the total weight of the copolymer comprising components (A1) and (A2) equaling 100 wt%.

In addition, it is possible that component (A) comprises or consists of acrylonitrile (monomer A1) and butylacrylate (monomer A2).

Further, it is possible that component (A) comprises or consists of 25.0 wt% to 60.0 wt% of acrylonitrile (monomer A1) and 40.0 wt% to 75.0 wt% of butylacrylate (monomer A2), wherein the wt% are based on the total weight of the copolymer comprising components (A1) and (A2) equaling 100 wt%.

It is further possible that the copolymer of component (A) according to the composition of the invention optionally comprises one or more monomers (A3) in addition to the monomers (A1) and (A2).

Non-limiting examples for these one or more additional monomers are (meth)acrylamide, (meth)acrylic acid, 1,3-butylene glycol dimethacrylate, 1,4-butylene glycol dimethacrylate, diethylene glycol dimethacrylate, dipropylene glycol dimethacrylate, 4-methyl-1,4-pentanediol dimethacrylate, propylene glycol dimethacrylate, ethylene glycol dimethacrylate, divinylbenzene, itaconic acid, N-methylol acrylamide, N-methylol methacrylamid, trivinylbenzene or mixtures thereof.

The one or more optional monomer (A3) can be present in component (A) in an amount of at least 0.001 wt%, or at least 0.01 wt%, or at least 0.1 wt%, but in any case at most 5.0 wt%, or at most 4.0 wt% or at most 3.0 wt%, or from 0.001 wt% to 5.0 wt%, or from 0.01 wt% to 4.0 wt%, or from 0.1 wt% to 3.0 wt%, wherein the wt% are based on the total amount of the copolymer comprising components (A1), (A2) and optionally (A3) equaling 100 wt%.

Component (A) may be present in the composition according to the invention in an amount of at least 30.0 wt%, or at least 40.0 wt%, or at least 45.0 wt%, or at most 90.0 wt%, or at most 80.0 wt%, or at most 75.0 wt%, or from 30.0 wt% to 90.0 wt%, or from 40.0 wt% to 80.0 wt%, or from 45.0 to 75.0 wt%, wherein the dry wt% of components (A), (B) and (C) add up to 100 wt%.

The molecular weight (Mₙ) for component (A) maybe at least 100,000 g/mol, or at least 200,000 g/mol, or at least 300,000 g/mol, or at least 400,000 g/mol, or at most 1,000,000 g/mol, or at most 900,000 g/mol, or at least 800,000 g/mol, or at least 700,000 g/mol, or may range between 100,000 to 1,000,000 g/mol, or between 200,000 to 900,000 g/mol, or between 300,000 to 800,000 g/mol. Preferred molecular weights for component (A) are between 200,000 to 900,000 g/mol, or between 300,000 to 800,000 g/mol. Molecular weight (Mₙ) of component (A) is measured after dissolution of component (A) into THF, at a concentration of maximum 50 g/100mL of acetone. This solution is then injected in a gel permeability chromatography, which separates the different chains according to their molecular weight. UV detector can be used.

Further, the glass transition temperature Tg of component (A) may be at least -40°C, or at least -30°C, or at least -20°C, or at most 40°C, or at most 30°C, or at most 20°C, or may range between -40°C to 40°C, or between -30°C to 30°C, or between -20°C to 30°C, or between -10°C to 30°C. Tg of component A is determined according to the method defined in the following with regard to component (B).

It is possible that one or more copolymers are used as component (A) in the composition according to the invention.

Further, it is possible that the additional copolymers of component (A) according to the invention comprise or consist of the same or (partially) different monomers or is made of one or more additional monomers.

Preferably, the composition according to the invention and/or component (A) do not contain any fluorine-based compounds, like PFAs.

The composition according to the invention further comprises at least one styrene maleic anhydride (SMA) copolymer as component (B). Optionally, the SMA can be esterified, like SMA methyl and butyl (sec- or iso-) esters. Such copolymers may contain b-nitrostyrene as a polymerization chain terminator.

It is possible that component (B) is present in the composition according to the invention in an amount of at least 2.0 wt%, or at least 4.0 wt%, or at least 5.0 wt%, or at least 10.0 wt%, or at most 30.0 wt%, or at most 28.0 wt%, or at most 27.5 wt%, or at most 26.0 wt% or in the range of from 2.0 wt% to 30.0 wt%, or from 4.0 wt% to 28.0 wt%, or from 5.0 wt% to 27.5 wt%, or from 10.0 wt% to 26 wt%, wherein the dry wt% of the components (A), (B) and (C) add up to 100 wt%.

It also possible that component (B) of the composition according to the invention at least comprises or consists of a varying maleic anhydride and styrene content.

Further, it is possible that the content of maleic anhydride monomer in the SMA polymer of component (B) is at least 20.0 wt%, or at least 21.0 wt%, or at most 30.0 wt%, or at most 27.0 wt%, or at most 25.0 wt% or vary in a range of from 20.0 wt% to 30.0 wt%, or in a range of 21.0 to 27.0 wt%, or in a range of 21.0 wt% to 25.0 wt%, wherein the wt% are based on the total weight of component (B) equaling 100 wt%

It is also possible that the content of the styrene monomer in the SMA polymer of component (B) is at least 70.0 wt%, or at least 73.0 wt%, or at least 75.0 wt%, or at most 80.0 wt%, or at most 79.0 wt%, or be vary in a range of from 70.0 wt% to 80.0 wt%, or in the range of 73.0 wt% to 79.0 wt%, or in a range of 75.0 wt% to 79.0 wt%, wherein the wt% are based on the total weight of component (B) equaling 100 wt%.

It is possible that the molecular weight (Mₙ) of SMA varies in broad boundaries and is at least 1000 g/mol, or at most 80,000 g/mol, or at most 50,000 g/mol, or at most 25,000 g/mol, or at most 10,000 g/mol, or at most 9,500 g/mol, or is in the range of from 1,000 g/mol to 80,000 g/mol, or from 1,000 g/mol to 50,000 g/mol, or from 1,000 g/mol to 25,000 g/mol, or from 1,000 g/mol to 10,000 g/mol. Molecular weight (Mₙ) of SMA are measured after dissolution of the SMA powder into acetone and/or THF, at a concentration of maximum 50 g/100mL of acetone. This solution is then injected in a gel permeability chromatography, which separates the different chains according to their molecular weight. UV detector can be used.

It is further possible that the Tg of SMA is at least 85 °C or at least 100 °C, or at least 115 °C, or at most 180 °C, or at most 165 °C. or at most 150 °C, or varies in a range of from 85 °C to 180 °C, or from 100°C to 165°C, or from 115°C to 150 °C, or from 115 °C to 165 °C, or from 100 °C to 150 °C. Tg of SMA are measured using DSC method (Differential Scanning Calorimetry), measurement starts at -85°C and until 200°C, heating is done with a ramp during 15 minutes.

Particularly suitable SMAs to be used as component (B) in the composition according to the invention contain 21.0 to 27.0 wt% maleic anhydride and 73.0 to 79.0 wt% of styrene, wherein the wt% are based on the total weight of component (B) (=100 wt%) and/or have a molecular weight in the range of 1,000 g/mol to 10,000 g/mol and/or have a glass transition temperature of between 120°C to 150°C.

Further, it is possible that the SMA copolymer acts as a polymeric surfactant in the composition according to the invention.

Suitable SMAs are sold under the trade name Xiran^{®} by Polyscope.

The composition according to the invention further comprises at least one elastomer as component (C).

The term "elastomer" refers to a polymeric compound having viscoelastic properties, weak intermolecular forces, a low young's modulus and a high failure strain compared to other materials.

It is possible to choose the at least one elastomer from the non-limiting group consisting of ethylene/vinyl acetate, polybutadiene, natural latexes, synthetic latexes, styrene-butadiene emulsions or mixtures thereof. Preferred are natural latex or polybutadiene or mixtures thereof.

It further is possible that the amount of component (C) in the composition according to the invention is at least 1.0 wt%, or at least 2.0 wt%, or at least 5.0 wt %, or at least 6.0 wt%, or at least 7.5 wt%, or at least 10.0 wt%, or at least 11 wt%, or at least 13 wt%, or at least 14 wt%, or at least 15 wt%, or at most 42.0 wt%, or at most 40 wt%, or at most 35.0 wt%, or at most 30.0 wt%, or at most 25.0 wt%, or at most 20.0 wt%, or is in the range of from 1.0 wt% to 42.0 wt%, or from 5.0 wt% to 42.0 wt%, or from 5.0 wt% to 40.0 wt%, or from 5.0 wt% to 35.0 wt%,or from 5.0 wt% to 30.0 wt% or from 5.0 to 25.0 wt%, or from 5.0 to 20.0 wt%, wherein the dry wt% of the components (A), (B) and (C) add up to 100 wt%. Preferred amounts of component (C) in the composition according to the invention are in the range of from 1.0 wt% to 42.0 wt%, or from 5.0 to 42.0 wt%, or from 5.0 to 30.0 wt%, or from 5.0 to 25.0 wt%, or from 5.0 to 20.0 wt% wherein the dry wt% of the components (A), (B) and (C) add up to 100 wt%.

The glass transition temperature T_{g} of component (C) can be at least -90°C, or at least -80°C, or at least -70°C, or up to -50°C, or up to -60°C, or range from -50°C to - 90°C, or from -60°C to - 80°C. The glass transition temperature T_{g} is determined using the same method as disclosed above, using DSC method (Differential Scanning Calorimetry), measurement starts at -85°C and until 200°C, heating is done with a ramp over 15 minutes.

It is possible that component (C) according to the invention comprises or consists of one or more elastomers, such as one, two, three or four elastomers.

It is further possible that component (C) according to the invention comprises only natural latex in an amount of from 1.0 wt% to 42.0 wt%, or from 1.0 wt% to 40.0 wt%, or from 1.0 to 20.0 wt%, or from 5.0 wt% to 42.0 wt%, or from 5.0 to 40.0 wt%, or from 5.0 to 30.0 wt%, or from 5.0 to 25.0 wt%, or from 5.0 to 20.0 wt% wherein the dry wt% of the components (A), (B) and (C) add up to 100 wt%.

It is also possible that component (C) according to the invention comprises only polybutadiene in an amount of from 1.0 wt% to 42.0 wt%, or from 1.0 wt% to 40.0 wt%, or from 1.0 to 20.0 wt%, or from 5.0 wt% to 42.0 wt%, or from 5.0 to 40.0 wt%, or from 5.0 to 30.0 wt%, or from 5.0 to 25.0 wt%, or from 5.0 to 20.0 wt%, wherein the dry wt% of the components (A), (B) and (C) add up to 100 wt%.

Further, it is possible that component (C) according to the invention comprises only natural latex and polybutadiene in an amount of from 1.0 wt% to 42.0 wt%, or from 1.0 wt% to 40.0 wt%, or from 1.0 to 20.0 wt%, or from 5.0 wt% to 42.0 wt%, or from 5.0 to 40.0 wt%, or from 5.0 to 30.0 wt%, or from 5.0 to 25.0 wt%, or from 5.0 to 20.0 wt%, wherein the dry wt% of the components (A), (B) and (C) add up to 100 wt%.

It is further possible that component (C) according to the invention comprises natural latex and polybutadiene and further elastomers known in the prior art.

It is possible that the composition according to the invention comprises or consists of component (A) in an amount in the range of from 30.0 wt% to 90.0 wt%; component (B) in an amount in the range of from 5.0 wt% to 30.0 wt%; and component (C) in an amount in the range of from 1.0 wt% to 42.0 wt%; wherein the wt% of the components (A), (B) and (C) are based on the total dry weight of the composition add up to 100 wt%.

In addition to components (A), (B) and (C), the composition according to the invention can further comprise one or more additional components known in the art and used within compositions applied to substrates in order to provide any resistances. Non-limiting examples for such additional components are non-ionic surfactants, ionic surfactants, pH adjusting agents, preservatives, dyes, pigments, defoamers, thickeners, waxes, wetting agents, plasticizers, or combinations thereof.

Optionally, it is possible that the composition according to the invention comprises one or more non-ionic surfactants such as but not limited to alcohol ethoxylates, ethylene oxide-propylene oxide block copolymers, alcohol alkoxylates, fatty acid ethoxylates, fatty amine ethoxylates or mixtures thereof.

Further optionally, it is further possible that the composition according to the invention comprises one or more ionic surfactants such as but not limited to salts of fatty acids, alkylbenzene sulfonates such as sodium dodecylbenzene sulfonate, alkylsulfonates, fatty alcohol sulfates such as sodium lauryl sulfate, alkylether sulfates such as sodium dodecyl poly(oxyethylene) sulfate or mixtures thereof.

In addition, it is possible that the optional one or more non-ionic and/or ionic surfactant is present in an amount of at least 0.01 wt%, or at least 0.05 wt%, or at least 0.1 wt%, or at least 0.25 wt%, or at most 5.0 wt%, or at most 4.0 wt%, or of from 0.01 wt% to 5.0 wt%, or from 0.05 wt% to 5.0 wt%, or from 0.1 wt% to 5.0 wt%, or from 0.1 to 4.0 wt%, or from 0.25 wt% to 5.0 wt%, wherein the wt% are based on the total dry weight of components (A), (B) and (C) of the composition according to the invention combined (=100 wt%).

It is possible that the composition according to the invention comprises or consists of components (A), (B) and (C), and one or more additional components, preferably at least one non-ionic and/or ionic surfactant.

It is also possible that the composition according to the invention comprises or consists of components (A), (B) and (C), and one or more additional components but being free of non-ionic and/or ionic surfactants.

It is possible that the composition according to the invention comprises one or more pH adjusting agents such as but not limited to ammonium hydroxide, sodium hydroxide, potassium hydroxide, or mixtures thereof.

It is possible that the composition according to the invention is a dry composition as for example a powder or a granulate, or mixtures thereof.

It is possible that the composition according to the invention is a dry mixture only comprising components (A), (B) and (C).

It is also possible that the composition according to the invention is a dry mixture comprising or consisting of components (A), (B) and(C) in the amounts as defined above with regard to the definitions of the respective components, e.g. component (A) in an amount of from 30.0 wt% to 90.0 wt%, component (B) in an amount of from 5.0 wt% to 30.0 wt% and component (C) in an amount of from 1.0 wt% to 42.0 wt%, wherein the dry wt% of the components (A), (B) and (C) add up to 100 wt%.

It is further possible that the composition according to the invention is a dry mixture comprising components (A), (B) and (C) and further one or more additional components in dry form such as but not limited to non-ionic surfactants, ionic surfactants, pH adjusting agents, preservatives, dyes, pigments, defoamers, thickeners, waxes, wetting agents, plasticizers, or combinations thereof.

In addition, it is possible that the composition according to the invention is a dry mixture comprising component (A) in an amount of from 30.0 wt% to 90.0 wt%, component (B) in an amount of from 5.0 wt% to 30.0 wt%, component (C) in an amount of from 1.0 wt% to 42.0 wt%, and one or more additional components in dry form such as but not limited to non-ionic surfactants, ionic surfactants, pH adjusting agents, preservatives, dyes, pigments, defoamers, thickeners, waxes, wetting agents, plasticizers, or combinations thereof, preferably at least a non-ionic surfactant in an amount of 0.01 wt% to 5 wt%, wherein the wt% is based on the total dry weight of components (A), (B) and (C) of the composition according to the invention.

It is further possible that the composition according to the invention is a liquid composition comprising at least one solvent such as but not limited to organic solvents and/or water. The composition according to the invention then may be an emulsion, a suspension, a solution, a slurry or a mixture thereof. In case the solvent comprises or consists of water, the composition may be regarded as aqueous composition. Preferably, the composition according to the invention is an aqueous composition.

It is possible that the composition according to the invention is a liquid composition comprising at least one solvent in an amount of 30.0 wt% to 100 wt%, or from 35.0 wt% to 80 wt%, or from 40 wt% to 60 wt%, wherein the wt% is based on the total weight of the composition according to the invention; or the composition according to the invention is a liquid composition and comprises at least one solvent in an amount of 50.0 wt% to 300 wt%, or from 50.0 wt% to 250 wt%, or from 50 wt% to 150 wt%, wherein the wt% is based on the total dry weight of components (A), (B) and (C) of the composition according to the invention.

It is also possible that the composition according to the invention is a liquid composition comprising components (A), (B), (C), and a solvent which is an organic solvent or water, preferably water.

In addition, it is possible that the composition according to the invention is a liquid composition comprising component (A) in an amount of from 15.0 wt% to 65.0 wt%; component (B) in an amount of from 2.0 wt% to 30.0 wt%; component (C) in an amount of from 2.5 wt% to 24.0 wt%; and at least one solvent as organic solvents or water, preferably water, in an amount of 30.0 wt% to 100 wt%, wherein the wt% are based on the total weight of the composition.

It is also possible that the composition according to the invention is a liquid composition comprising component (A) in an amount of from 30.0 wt% to 90.0 wt%; component (B) in an amount of from 5.0 wt% to 30.0 wt%; component (C) in an amount of from 1.0 wt% to 42 wt%; and at least one solvent as organic solvents or water, preferably water, in an amount of 50.0 wt% to 300 wt%, wherein the wt% are based on the total dry weight of components (A), (B) and (C) of the composition according to the invention.

In particular it is possible that the composition according to the invention is a liquid composition comprising component (A) in an amount of from 40.0 wt% to 70.0 wt%; component (B) in an amount of from 20.0 wt% to 30.0 wt%: component (C) in an amount of from 5.0 wt% to 15.0 wt%, and water in an amount of from 100.0 wt% to 200.0 wt%, wherein the wt% are based on the total dry weight of components (A), (B) and (C) of the composition according to the invention.

In particular, it is possible that the composition according to the invention is a liquid composition comprising component (A) in an amount of from 20.0 wt% to 30.0 wt%; component (B) in an amount of from 5.0 wt% to 15.0 wt%; component (C) in an amount of from 1.0 wt% to 10.0 wt%; and at least one solvent as organic solvents or water, preferably water, in an amount of 30.0 wt% to 80 wt%, wherein the wt% are based on the total weight of the composition.

Further, it is also possible that the composition according to the invention is a liquid composition comprising or consisting of components (A), (B) and (C), at least one solvent as organic solvents or water, preferably water, and further one or more additional components such as but not limited to non-ionic surfactants, ionic surfactants, pH adjusting agents, preservatives, dyes, pigments, defoamers, thickeners, waxes, wetting agents, plasticizers, or combinations thereof.

It is also possible that the composition according to the invention is a liquid composition comprising or consisting of component (A) in an amount of from 30.0 wt% to 90.0 wt%; component (B) in an amount of from 2.0 wt% to 30.0 wt%; component (C) in an amount of from 1.0 wt% to 42.0 wt%; at least one solvent as organic solvents or water, preferably water, in an amount of 50.0 wt% to 300 wt%; and at least one or more non-ionic or ionic surfactants in an amount of from 0.01 wt% to 5.0 wt%, wherein the wt% are based on the total dry weight of components (A), (B) and (C) of the composition according to the invention.

It is further possible that the composition according to the invention is a liquid mixture comprising or consisting of components component (A) in an amount of from 30.0 wt% to 90.0 wt%; component (B) in an amount of from 5.0 wt% to 30.0 wt%; component (C) in an amount of from 1.0 wt% to 42.0 wt%; at least one solvent as organic solvents or water, preferably water, in an amount of 50.0 wt% to 300 wt%; and at least one or more non-ionic and/or ionic surfactants in an amount of from 0.1 wt% to 5.0 wt%, wherein the wt% are based on the total dry weight of components (A), (B) and (C) of the composition according to the invention

In addition, it is possible that the composition according to the invention is a liquid mixture comprising components component (A) in an amount of from 15.0 wt% to 65.0 wt%; component (B) in an amount of from 2.0 wt% to 30.0 wt%; component (C) in an amount of from 2.5 wt% to 24.0 wt%; at least one solvent as organic solvents or water, preferably water, in an amount of 30.0 wt% to 100.0 wt%; and at least one non-ionic and/or ionic surfactant in an amount of from 0.005 wt% to 5.0 wt%, wherein the wt% are based on the total weight of the composition.

In addition, it is possible that the composition according to the invention is a liquid mixture comprising or consisting of components component (A) in an amount of from 20.0 wt% to 65.0 wt%; component (B) in an amount of from 4.0 wt% to 30.0 wt%; component (C) in an amount of from 5.0 wt% to 24.0 wt%; at least one solvent as organic solvents or water, preferably water, in an amount of 50.0 wt% to 250.0 wt%; and at least one non-ionic and/or ionic surfactant in an amount of from 0.01 wt% to 2.5 wt%, wherein the wt% are based on the total weight of the composition.

Further, all dry or liquid compositions disclosed may additionally include compounds remaining from the copolymerization reaction of the comprised copolymers. The term "compounds remaining from the copolymerization reaction of the comprised copolymers" refers to any monomer, oligomers, salts, solvents, reagents, degradation product, by-products or combinations thereof being derived from the (co-)polymerization reactions performed in order to obtain components (A), (B) or (C).

The invention further relates to a method of manufacturing the composition according to invention comprising at least the following steps a) and b):
a) Performing sub-steps i., ii., optionally iii.:
   i. providing component (B) to the first reaction area;
   ii. providing at least the monomers (A1) and (A2) to a second reaction area to obtain a monomer mixture; optionally combining the monomer mixture in the second reaction area with the mixture of the first reaction area; and copolymerizing said monomer mixture; or provide component (A) directly;
   iii. optionally mixing the composition obtained in step i. and/or the composition obtained in step ii. to provide a first copolymer mixture;
b) Addition of component (C) to the copolymer mixture obtained in step a);
wherein optionally in any of steps a)i., a)ii., a)iii., or b) one or more additional components may be added to the respective mixtures.

The term "reaction area" refers to any reaction chamber known in the prior art suitable for performing the respective reactions, such as but not limited to vessels, beakers, reactors, flasks or combinations thereof. The definitions, ranges, determination methods, etc. as disclosed above for all components which are or can be present in the composition according to the invention, apply here for the method for manufacturing of the composition according to the invention as well.

In step a) of the method according to the invention, steps i., ii. and optionally iii are performed.

In step i., component (B) of the composition according to the invention is provided to a first reaction area.

Optionally, one or more additional components can be added before, during and/or after the provision of component (B) of the composition according to the invention. Suitable additional components are known in the prior art and can be selected from the non-limiting group consisting of such as non-ionic surfactants, ionic surfactants, pH adjusting agents, preservatives, dyes, pigments, defoamers, thickeners, waxes, wetting agents, plasticizers, or combinations thereof.

Further, it is possible that component (B) of the composition according to the invention is added in step i. in a dry form; or as a liquid mixture such as in combination with at least one solvent, like water.

In addition, it is possible that component (B) is provided in a dry form in an amount of from 80.0 wt% to 100 wt% optionally together with a non-ionic and/or ionic surfactant in an amount of from 0.0 wt% to 20.0 wt%, wherein the wt% are based on the total weight of the components provided in step i..

In addition, it is possible that component (B) is provided as a liquid composition in an amount of from 10.0 wt% to 30.0 wt%, optionally together with a non-ionic and/or ionic surfactant in an amount of from 0.01 wt% to 2.5 wt% and at least one solvent, preferably comprising or consisting of water, in an amount of 70.0 wt% to 90.0 wt%, wherein the wt% are based on the total weight of the components provided in step i..

Further, it is possible to pre-temper the mixture in the first reaction area comprising component (B) of the composition according to the invention by any technical means known in the art to a temperature of at least 20 °C, or at least 30 °C, or at least 40 °C, or at most 120 °C, or at most 100 °C, or at most 90 °C, or of from 20 °C to 120 °C, or of from 30 °C to 100 °C, or of from 40 °C to 90 °C, or to 80°C, or to room temperature.

In step ii., at least the monomers (A1) and (A2) are provided in at least one solvent, preferably comprising or consisting of water, to a second reaction area to obtain a monomer mixture.

Optionally, it is possible to add one or more additional components before, during and/or after the provision of at least monomers (A1) and (A2) to the second reaction area. Suitable additional components are known in the prior art and can be selected from the non-limiting group consisting of such as non-ionic surfactants, ionic surfactants, pH adjusting agents, preservatives, dyes, pigments, defoamers, thickeners, waxes, wetting agents, plasticizers, or combinations thereof.

It is possible that monomer (A1) is provided in an amount of from 25.0 wt% to 60.0 wt% and monomer (A2) is provided in an amount of from 40.0 wt% to 75.0 wt%, wherein the wt% are based on the total weight of the monomers (A1) and (A2) provided in step ii..

It is possible that monomer (A1) is provided in an amount of from 25.0 wt% to 60.0 wt% and monomer (A2) is provided in an amount of from 75.0 wt% to 40.0 wt% together with at least one solvent, preferably comprising or consisting of water, in an amount of from 10.0 wt% to 35.0 wt%, wherein the wt% are based on the total weight of the components provided in step ii..

In addition, it also is possible that monomer (A1) is provided in an amount of from 25.0 wt% to 60.0 wt% and monomer (A2) is provided in an amount of from 75.0 wt% to 40.0 wt% together with at least one solvent, preferably comprising or consisting of water, in an amount of from 10.0 wt% to 30.0 wt% and a non-ionic and/or ionic surfactant in an amount of from 0.01 wt% to 5.0 wt%, wherein the wt% are based on the total weight of the components provided in step ii..

Further, it is possible to pre-temper the monomer mixture comprising at least monomers (A1) and (A2) of the composition according to the invention by any technical means known in the art to a temperature of at least 0 °C, or at least 10 °C, or at least 20 °C, or at most 80 °C, or at most 60 °C, or at most 40 °C, or of from 0 °C to 80 °C, or of from 10 °C to 60 °C, or of from 20 °C to 40 °C, or to below 25°C.

Further optionally, it is possible to add before, during and/or after the provision of monomer (A1) and (A2) to the monomer mixture one or more additional monomers (A3) in step ii.

Optionally, it is possible to combine the monomer mixture of the second reaction area, with the mixture obtained in step i.

Further in step ii., the monomer mixture is copolymerized in presence or absence of the mixture obtained in step i. to obtain component (A). Preferably, the mixture of step i. is present during the copolymerization of the monomer mixture of step ii.

It is possible to perform the copolymerization in step ii. at a temperature in the range of from 0 °C to 95 °C, or from 10 °C to 90 °C, or from 20 °C to 90 °C, or from 40 °C to 80 °C for a time in the range of from 0.25 h to 24 h, or from 0.5 h to 18 h, or from 1 h to 12 h, or from 1 h to 8 h.

It is possible that the copolymerization requires an initiator to start the reaction. Initiators suitable for the reaction are not limited and may be found in the prior art as for example but not limited to heat, irradiation, or initiator compounds able to be used as chain reaction starter.

The term "chain reaction starter" refers to any compound known in the prior art which can be used to initiate a polymeric chain reaction by any mechanism known as for example but not limited to forming a radical, a charged atom etc. Non-limiting examples are sodium persulfate, azobisisobutyronitrile (AIBN), ammonium persulfate, potassium persulfate, hydrogen peroxide, tert-butyl hydroperoxide, or combinations thereof.

It is possible to prepare an initiator compound mixture in a third reaction area comprising at least one solvent and at least one initiator, preferably comprising or consisting of water and add said initiator compound mixture after complete homogenization to the mixture in the second reaction area.

It is possible to prepare an initiator compound mixture in a third reaction area comprising at least one solvent, preferably comprising or consisting of water in an amount of from 80.0 wt% to 99.5 wt% and at least one initiator, preferably sodium persulfate, in an amount of 0.5 wt% to 20.0 wt%, wherein the wt% are based on the total weight of the components provided in the third reaction area.

Further, it is possible to pre-temper the initiator compound mixture to a temperature of at least 0 °C, or at least 10 °C, or at least 20 °C, or at most 80 °C, or at most 60 °C, or at most 40 °C, or of from 0 °C to 80 °C, or of from 10 °C to 60 °C, or of from 20 °C to 40 °C, or to below 25°C.

It is possible to add the initiator compound mixture to the mixture in the second reaction area all at once, or portionwise over the duration of the copolymerization. The initiator compound mixture can be added simultaneously with the monomer mixture of the second reaction area to the mixture of the first reaction area, portionwise or all at once.

Further, it is possible that the mixture resulting from the combination of the initiator compound mixture, mixture in the second reaction area is allowed to stand for an additional timeframe in the range of from 0.25 h to 24 h, or from 0.5 h to 18 h, or from 1 h to 12 h, or from 1 h to 8 h at a temperature of from 0°C to 95°C, or from 10°C to 90°C, or from 20°C to 90°C, or from 40 °C to 80°C.

Optionally, before the copolymerization of step ii., a homogenization step can be performed in order to homogenize all reagents present in the mixture in the second reaction area.

Preferably, the copolymerization is designed as emulsion polymerization. Preferably, component (B) acts as polymeric surfactant in the copolymerization, which is preferably designed as emulsion polymerization. Preferably, no non-ionic and/or ionic surfactants are present in the copolymerization.

Further, it is possible to completely dry the copolymer mixture obtained after the finalization of copolymerization in step ii. of the method according to the invention by any technical means known in the prior art.

Instead of the provision of at least monomers (A1) and (A2) and the subsequent copolymerization reaction, it is possible to directly provide readily synthesized component (A) in step ii. of the method according to the invention.

In step iii. optionally a mixing step is performed after performing sub-steps i. and ii. of the method according to the invention, in which the mixture of component (B) in the first reaction area and the mixture of component (A) in the second reaction area are combined and optionally homogenized.

The mixture obtained in step iii. can be a dry or a liquid mixture.

In step b) of the method according to the invention, component (C) is added to the copolymer mixture obtained from step a) of the method according to the invention.

Optionally, it is possible to add before, during and/or after the provision of component (C) to the copolymer mixture one or more additional components such as non-ionic surfactants, ionic surfactants, pH adjusting agents, preservatives, dyes, pigments, defoamers, thickeners, waxes, wetting agents, plasticizers, or combinations thereof.

It is also possible to add component (C) of the composition according to the invention in a dry form or in a liquid mixture for example together with at least one solvent, preferably comprising or consisting of water.

It is further possible that component (C) of the composition according to the invention is added as an aqueous emulsion, an aqueous suspension, an aqueous solution, an aqueous slurry or a mixture thereof.

Further, it is possible to provide component (C) of the composition according to the invention in dry form.

It is possible to prepare in the first reaction area a liquid mixture comprising component (B) in an amount of from 10.0 wt% to 30.0 wt% together with a surfactant in an amount of from 0.01 wt% to 2.5 wt% and at least one solvent, preferably comprising or consisting of water, in an amount of 70.0 wt% to 90.0 wt%, wherein the wt% are based on the total weight of the components provided in the first reaction area.; and
in the second reaction area a mixture comprising monomer (A1) in an amount of from 25.0 wt% to 60.0 wt% and monomer (A2) in an amount of from 75.0 wt% to 40.0 wt% together with at least one solvent, preferably comprising or consisting of water, in an amount of from 10.0 wt% to 30.0 wt% and a surfactant in an amount of from 0.01 wt% to 5.0 wt%, wherein the wt% are based on the total weight of the components provided in the second reaction area;
in a third reaction area a mixture comprising at least one solvent, preferably comprising or consisting of water in an amount of from 80.0 wt% to 99.5 wt% and at least one initiator preferably sodium persulfate in an amount of 0.5 wt% to 20.0 wt%, wherein the wt% are based on the total weight of the components provided in the third reaction area; and
to pre-temper the mixture of the first reaction area to a temperature in the range of from 40 °C to 90 °C and add it to the mixture in the second reaction area and then add the mixture of the third reaction area in portions over a period of from 1 h to 8 h at a temperature in the range of from 40 °C to 90 °C; and
to provide component (C) as an aqueous dispersion to obtain a liquid composition according to the invention.

In addition, it is possible to prepare in the first reaction area first reaction area a dry mixture comprising component (B) in an amount of from 80.0 wt% to 99.99 wt% together with a surfactant in an amount of from 0.01 wt% to 20.0 wt%, wherein the wt% are based on the total weight of the components provided in the first reaction area.; and in the second reaction area a mixture comprising monomer (A1) in an amount of from 25.0 wt% to 60.0 wt% and monomer (A2) in an amount of from 75.0 wt% to 40.0 wt% together with at least one solvent, preferably comprising or consisting of water, in an amount of from 10.0 wt% to 30.0 wt% and a surfactant in an amount of from 0.01 wt% to 5.0 wt%, wherein the wt% are based on the total weight of the components provided in the second reaction area;
in a third reaction area a mixture comprising at least one solvent, preferably comprising or consisting of water in an amount of from 80.0 wt% to 99.5 wt% and at least one initiator preferably sodium persulfate in an amount of 0.5 wt% to 20.0 wt%, wherein the wt% are based on the total weight of the components provided in the third reaction area; and
to pre-temper the mixture of the first reaction area to a temperature in the range of from 40 °C to 90 °C and add it to the mixture in the second reaction area and then add the mixture of the third reaction area in portions over a period of from 1 h to 8 h at a temperature in the range of from 40 °C to 90 °C; and
to dry it completely after the reaction; and
to provide component (C) in dry form in an amount of from 1 to 42 wt% to obtain a dry composition according to the invention, wherein the wt% are based the total dry wt% of the components (A), (B) and (C) add up to 100 wt%.

Further, it is possible to prepare in the first reaction area a dry mixture comprising component (B) in an amount of from 80.0 wt% to 99.99 wt% together with a surfactant in an amount of from 0.01 wt% to 20.0 wt%, wherein the wt% are based on the total weight of the components provided in the first reaction area.; and
in the second reaction area component (A); and
combine the mixtures comprised in the first reaction area and in the second reaction area and mix them together; and
to add component (C) in dry form to obtain a dry composition according to the invention; wherein component (A) is present in an amount in the range of from 30.0 wt% to 90.0 wt% and component (C) is present in an amount in the range of from 1.0 wt% to 42.0 wt%; wherein the total dry wt% of the components (A), (B) and (C) add up to 100 wt%.

The invention further relates to the use of the composition according to the invention or as manufactured by the method according to the invention as oil-barrier and/or grease-barrier and/or water-barrier on a substrate, wherein the substrate is as defined above.

The invention further relates to a method of manufacturing a coated substrate comprising the following steps:
I) applying composition according to the invention or a composition as manufactured according to the invention onto the substrate;
II) drying the composition according to the invention or a composition as manufactured according to the invention on the substrate.

The term "applying" thereby includes any technical means known in the art to apply a composition, in particular a liquid composition onto a substrate such as but not limited to coating, spraying, brushing, dipping, or combinations thereof.

In step I) of the method of manufacturing a coated substrate according to the invention, a composition according to the invention or a composition as manufactured according to the invention is applied onto a suitable substrate. The definitions as used before apply here as well.

The composition according to the invention or the composition as manufactured by the method according to the invention can be directly used in step I. in case it is a liquid composition. In case the composition according to the invention or the composition as manufactured by the method according to the invention is a dry composition, addition of at least on solvent, preferably comprising or consisting of water is necessary.

It is possible to perform the applying step I. one or more times.

Further, it is possible to temper the composition and/or the substrate before, during or after step I..

In step II., the treated substrate is dried by any technical means known in the prior art such as but not limited to hot air drying, IR irradiation, Drying by contact with hot metal cylinder, or combinations thereof.

Further, the invention relates to a coated substrate manufactured according to the invention comprising or consisting of the composition according to the invention or comprising or consisting of a composition as manufactured according to the method according to the invention. The definitions as used before apply here as well.

The invention further relates to a coated substrate comprising an overcoat selected from any overcoating known in the prior art. Non-limiting examples for overcoatings are humidity barriers, oxygen barriers, heatsealings, gas barriers, esthetic overcoatings such as printing, varnish or to provide gloss, or combinations thereof.

Further, the invention relates to a manufacturing method of an article comprising or consisting of the coated substrate according to the invention or as manufactured according to the method according to the invention, wherein the coated substrate is subjected to measures selected from the group comprising cut, fold, gluing, curing, dyeing, or combinations thereof. The definitions as used before apply here as well.

Further, the invention relates to an article comprising or consisting of the coated substrates according to the invention or as manufactured according to the methods according to the invention, wherein the article is a food container, plate, straw, bags, bowls, cloths, bags (made from paper or textile). The definitions as used before apply here as well.

It is possible that the article comprising the coated substrates according to the invention or as manufactured according to the methods according to the invention is a textile, such as but not limited to clothing articles or bags.

### EXAMPLES

In the following, the invention will be described in more detail, however, without being limited to the following specific embodiments.

### General preparation procedure for the Examples:

300 g of demineralized water are introduced in a reactor (reactor 1). Optionally component (B) is added and dissolved into the demineralized water with ammonium hydroxide (see Table 1). This mixture is then heated to 80°C. In case of Comp. Ex. 1, 3 and 4 2 g of lauryl sulfate are added instead of SMA. In case of Inv. Ex. 1, 1 g lauryl sulfate are added together with SMA.

In another reactor (reactor 2) 10 g of lauryl sulfate (omitted in Inv. Ex. 6) are dissolved into demineralized water and then, at least the monomers (A1) and (A2) are added. This monomer mixture is stirred to be homogenized, and kept below 25°C.

In a third reactor (reactor 3), 1 g sodium persulfate is dissolved in 39 g demineralized water. This solution is also kept at a temperature of below 25°C.

When the internal temperature of reactor 1, reaches 80°C, the mixture contained in reactor 2 is dosed into the mixture of reactor 1, while simultaneously, also the content of reactor 3 is dosed into reactor 2. Dosage takes place within 5 hours. At the end of the dosages, pumps are rinsed with 8 g of demineralized water. The internal temperature is maintained at 80 °C for 1 hour. The thus obtained copolymer dispersion is then cooled down to room temperature.

At room temperature, the copolymer dispersion is then formulated with addition of component (C).

The results of the water-, grease and oil-resistance tests as well as for the blocking temperatures can be found in table 2 in case of the comparative examples and table 3 in case of the inventive examples.

**Table 1a: Compositions of the comparative and the inventive examples.**

| | **Component A*** | | | **Component B*** |
|---|---|---|---|---|
| | **A1** | **A2** | | |
| **Co. Ex. 1°** | 230 g styrene | 240 g 2-ethylhexylacrylate | 47% | - |
| **Co. Ex. 2** | - | - | - | - |
| **Co. Ex. 3°** | 230 g styrene | 240 g 2-ethylhexylacrylate | 44% | - |
| **Co. Ex. 4°** | 230 g styrene | 240 g 2-ethylhexylacrylate | 47% | - |
| **Co. Ex. 5** | 230 g styrene | 240 g 2-ethylhexylacrylate | 47% | 100 g SMA (10%) |
| **Co. Ex. 6** | 230 g styrene | 240 g butylacrylate | 47% | 100 g SMA (10%) |
| **Co. Ex. 7** | 470 g butyl methacrylate | | 47% | 100 g SMA (10%) |
| **Co. Ex. 8** | 470 g butyl methacrylate | | 42% | 100 g SMA (9%) |
| **Co. Ex. 9** | 230 g styrene | 240 g 2-ethylhexylacrylate | 27% | 100 g SMA (6%) |
| **Inv. Ex. 1^{x}** | 172 g styrene | 171 g 2-ethylhexylacrylate | 33% | 50 g SMA (5%) |
| **Inv. Ex. 2** | 230 g styrene | 240 g 2-ethylhexylacrylate | 42% | 100 g SMA (9%) |
| **Inv. Ex. 3** | 230 g styrene | 240 g butylacrylate | 42% | 100 g SMA (9%) |
| **Inv. Ex. 4** | 109 g styrene | 109 g 2-ethylhexylacrylate | 22% | 100 g SMA (10%) |
| **Inv. Ex. 5** | 196 g styrene | 197 g 2-ethylhexylacrylate | 28% | 100 g SMA (7%) |
| **Inv. Ex. 6^{#}** | 230 g styrene | 240 g 2-ethylhexylacrylate | 42% | 100 g SMA (9%) |

**Table 1b: Continuation of table 1a.**

| | **Component C*** | **Water (added to reactor 2)** |
|---|---|---|
| **Co. Ex. 1** | - | 170 g |
| **Co. Ex. 2** | natural latex | |
| **Co. Ex. 3** | 178 g natural latex (10%) | 71 g |
| **Co. Ex. 4** | 100g paraffin wax (6%) | 80 g |
| **Co. Ex. 5** | - | 72 g |
| **Co. Ex. 6** | - | 72 g |
| **Co. Ex. 7** | - | 72 g |
| **Co. Ex. 8** | 112 g natural latex (6%) | 72 g |
| **Co. Ex. 9** | 714 g natural latex (25%) | 72 g |
| **Inv. Ex. 1^{x}** | 174 g natural latex (10%) | 126 g |
| **Inv. Ex. 2** | 112 g natural latex (6%) | 72 g |
| **Inv. Ex. 3** | 112 g natural latex (6%) | 72 g |
| **Inv. Ex. 4** | 252 g natural latex (15%) | 72 g |
| **Inv. Ex. 5** | 461 g natural latex (20%) | 72 g |
| **Inv. Ex. 6^{#}** | 112 g natural latex (6%) | 72 g |

| | | |
|---|---|---|
| * % means wt% based on the total weight of the aqueous composition ° Comp. Examples 1, 3 and 4 are made with 2 g of lauryl sulfate, but no SMA. ^{x}Inv. Example 1 is made with 1 g lauryl sulfate added to reactor 1 together with SMA. inventive Example 6 is made without addition of any non-ionic or ionic surfactant. | | |

### Coating procedure

All comparative and inventive example compositions are applied using an Automatic Coater at 250 mm/s on office white paper with a coatweight of 5 g/m² and dried at a temperature of 110°C using an IR lamp. The results achieved from the herein described tests, i.e. water-resistance, oil-resistance and blocking temperature may be found for the comparative examples in table 2 and for the inventive examples in table 3.

### General procedure for folding

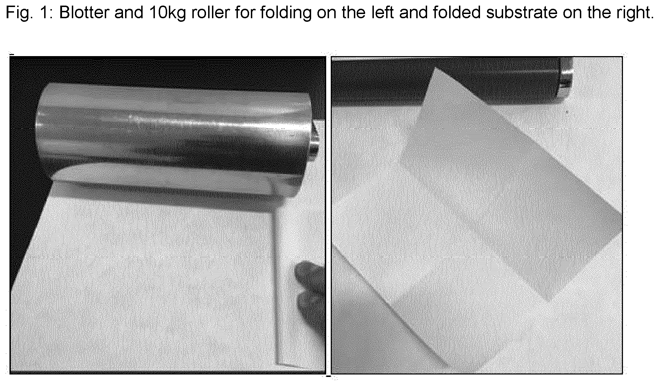

All the resistances discussed in this example section were measured before and after a subsequent folding process to obtain data on the foldability of the substrates treated with the respective compositions. Folding was performed on a large blotter with a 10 kg roller. The substrates were folded in half twice, once in the machine direction and once crosswise to the machine direction. Fig. 1 shows the blotter and roller as well as a result of the folding.

### Determination of water resistance

In the following examples, the reported water resistance is determined according to Tappi standard T441 Cobb Test. The reported water resistance is determined prior to folding and after folding and expressed mass of water absorbed in a specific time by a square meter of paper, under a height of water of 1 cm at a specific temperature (23°C, 50°HR). The higher the reported value (in g/m²) is, the lower is the water resistance. E.g. untreated, completely uncoated card board can have a Cobb value of up to 180 g/m².

### Determination of oil/grease resistance

In the following examples, the reported oil resistance is determined according to Tappi standard T559 KIT Test. The reported oil resistance is determined prior to folding and after folding. A value of 1 means bad/no oil/grease resistant properties, while a value of 12 means best/high oil grease resistant properties.

### Determination of blocking temperature

The blocking temperature is determined as follows: Two test specimen (25 mm * 297 mm) of the treated substrate are prepared and placed in a superimposed relationship to each other with the treated surface directed to each other in a HT-IXS Hot Tack Tester. Standard test is carried out with a 10 s dwell time and 1 bar pressure. Both jaws are heated, with the temperature variable. Seal strength is measured, i.e. the strength required to separate 2 strips if they have sealed. "Blocking temperature" is the highest temperature for which the apparatus measures no tack, i.e. no strength to the 2 strips.

**Table 2: Results of the water- and oil-resistance tests and determined blocking temperature of the comparative examples.**

| | **water resistance (Cobb test)** | | **Oil resistance (KIT test)** | | **Blocking temperature** | |
|---|---|---|---|---|---|---|
| **Results** | **b/a* [g/m²]** | **comment** | **b/a*** | **comment** | **before*** | **comment** |
| **Co. Ex. 1** | 12/13 | medium resistance | 12/12 | good resistance | <40 °C | too sticky at 40 °C |
| **Co. Ex. 2** | 11/13 | loss of resistance after folding | 4/3 | low resistance and loss after folding | 20 °C | too sticky at room temperature |
| **Co. Ex. 3** | 12/13 | slight loss of resistance after folding | 10/5 | loss of resistance after folding | 35 °C | too sticky at 40 °C |
| **Co. Ex. 4** | 40/49 | limited resistance and loss after folding | 12/6 | loss of resistance after folding | 75 °C | - |
| **Co. Ex. 5** | 8/8 | good resistance | 10/6 | loss of resistance after folding | 75 °C | Stickiness starts > 60°C |
| **Co. Ex. 6** | 6/6 | good resistance | 12/6 | loss of resistance after folding | 50 °C | no blocking problem <50°C |
| **Co. Ex. 7** | 100/100 | no resistance | 12/3 | loss of resistance after folding | 40 °C | Blocking at 40°C |
| **Co. Ex. 8** | 70/70 | only slight resistance | 12/12 | good resistance | 40 °C | Blocking at 40°C |
| **Co. Ex. 9** | 5/6 | good resistance | 12/6 | loss of resistance after folding | 60 °C | - |

| | | | | | | |
|---|---|---|---|---|---|---|
| * respective result was determined before/after folding of the coated paper (g/m²) | | | | | | |

In conclusion, low SMA proportions as in comparative examples 1 to 3 lead to undesirably sticky compositions, i.e. compositions blocking at low temperatures already, in combination with the styrene-acrylate copolymer. However, addition of SMA alone does not lead to satisfying compositions either since all resistances decrease after folding of the treated substrate and thus, are insufficient for finally shaped articles. Similar can be observed for compositions based on acrylic copolymers as known in the prior art having deficiencies in the resistances after folding.

Further it is apparent from comparative examples 2, 3, 8 and 9 that the addition of an elastomer as e.g. natural latex may lead to an higher resistance to folding. However, the elastomer itself does not provide sufficient resistances.

**Table 3: Results of the water- and oil-resistance tests and determined blocking temperature of the inventive examples.**

| | **water resistance (Cobb test)** | | **Oil resistance (KIT test)** | | **Blocking temperature** | |
|---|---|---|---|---|---|---|
| **Results** | **b/a*** | **comment** | **b/a*** | **comment** | **before*** | **comment** |
| **Inv. Ex. 1** | 5/5 | good resistance | 10/8 | good resistance, slight loss after folding | 60 °C | no blocking problem <60°C |
| **Inv. Ex. 2** | 4/4 | good resistance | 12/12 | good resistance | 60 °C | no blocking problem <60°C |
| **Inv. Ex. 3** | 5/5 | good resistance | 12/12 | good resistance | 60 °C | no blocking problem <60°C |
| **Inv. Ex. 4** | 6/8 | slight loss of resistance after folding | 12/7 | Slight loss of resistance after folding | 75°C | no blocking problem <75°C |
| **Inv. Ex. 5** | 5/5 | good resistance | 12/12 | good resistance | 60 °C | no blocking problem <60°C |
| **Inv. Ex. 6** | 2/2 | good resistance | 12/12 | good resistance | 60 °C | no blocking problem <60°C |

| | | | | | | |
|---|---|---|---|---|---|---|
| * respective result determined either before(b)/after(a) folding of the coated paper (g/m²) | | | | | | |

In comparison to the before discussed comparative examples, all inventive examples show low water uptakes in the Cobb test and high oil/grease resistance ratings in the KIT test. Further, blocking temperatures are sufficiently high to satisfy industrial requirements. Additionally, the inventive examples show an improved resistance in said tests even after subsequent folding processes.

In summary, all inventive examples according to the invention provide good water- and oil/grease-resistances and further sufficiently high blocking temperatures and thus, solve the object of the present invention.

### Product stability tests

Finally, product stability was measured for all compositions. 100 g of the respective sample were stored in a glass flask (125 mL) at 50 °C. Samples were checked every 24 h for visible phase separation.

In a second stability test, the 100 g of the respective samples were filtered on a 150 µm nylon filter. The weight of the grits remaining on the filter was weighed and expressed in ppm in relation to the total weight of the respective product. The results may be found in the below table 4.

**Table 4: Results of the stability tests performed with all samples.**

| | **Result of the stability test** |
|---|---|
| **Co. Ex. 1** | Product still homogeneous after 2 months; no phase separation; no grits in filtration test. |
| **Co. Ex. 2** | Dispersion stable 6 weeks. |
| **Co. Ex. 3** | Formulation stable 7 weeks; no phase separation; no grits in filtration test. |
| **Co. Ex. 4** | Formulation unstable after 4 days. |
| **Co. Ex. 5** | Product still homogeneous after 2 months; no phase separation; no grits in filtration test. |
| **Co. Ex. 6** | Product still homogeneous after 2 months; no phase separation; no grits in filtration test. |
| **Co. Ex. 7** | Product still homogeneous after 2 months; no phase separation; no grits in filtration test. |
| **Co. Ex. 8** | Product still homogeneous after 2 months; no phase separation; no grits in filtration test. |
| **Co. Ex. 9** | Formulation unstable after 3 days; > 500 ppm grits content. |
| **Inv. Ex. 1** | Product still homogeneous after 2 months; no phase separation; no grits in filtration test. |
| **Inv. Ex. 2** | Product still homogeneous after 2 months; no phase separation; no grits in filtration test. |
| **Inv. Ex. 3** | Product still homogeneous after 2 months; no phase separation; no grits in filtration test. |
| **Inv. Ex. 4** | Product still homogeneous after 56 days; no phase separation; no grits in filtration test. |
| **Inv. Ex. 5** | Product still homogeneous after 53 days; no phase separation; no grits in filtration test. |
| **Inv. Ex. 6** | Product homogeneous even after two months; no phase separation; no grits in filtration test. |

From the product stability test results depicted in table 4, it can be clearly seen that components as waxes or high proportions of natural latex lead to stability issues. However, all inventive examples show satisfying storage properties at 50 °C and are thus, suitable products for coating applications.

## Claims

1. Composition for providing water-, and/or oil-, and/or grease-resistant properties to a substrate, comprising at least components (A), (B) and (C), wherein
(A) is at least one copolymer comprising the following monomer units
(A1) at least one monomer selected from styrene, methyl methacrylate, (meth)acrylonitrile, α-methyl styrene or mixtures thereof; and
(A2) at least one monomer comprising acrylic acid ester units;
(B) is at least one styrene maleic anhydride copolymer, and
(C) is at least one elastomer.

2. Composition according to claim 1, wherein the at least one monomer (A1) is present in an amount of 25.0 to 60.0 wt%, and/or the at least one monomer (A2) is present in an amount of 40.0 to 75.0 wt%, optionally wherein one or more further monomers (A3) may be present the copolymer in an amount of at most 5 wt%, the copolymer comprising components (A1), (A2) and optionally (A3) equaling 100 wt%.

3. Composition according to at least one of claims 1 or 2, wherein the at least one monomer (A2) is selected from 2-ethyl-hexyl acrylate, butyl (meth)acrylate, ethyl (meth)acrylate, methyl acrylate or a mixture thereof.

4. Composition according to at least one of the claims 1 to 3, wherein the one or more further monomers (A3) are selected from (meth)acrylamide, (meth)acrylic acid, 1,3-butylene glycol dimethacrylate, 1,4-butylene glycol dimethacrylate, diethylene glycol dimethacrylate, dipropylene glycol dimethacrylate, divinyl benzene, ethylene glycol dimethacrylate, itaconic acid, N-methylol(meth)acrylamide, 4-methyl-1,4-pentanediol dimethacrylate, propylene glycol dimethacrylate, trivinyl benzene, or mixtures thereof.

5. Composition according to at least one of the preceding claims 1 to 4, wherein component (A) is present in an amount in the range of from 30.0 wt% to 90.0 wt%; component (B) is present in an amount in the range of from 2.0 wt% to 30.0 wt%; component (C) is present in an amount in the range of from 1.0 wt% to 42.0 wt%; wherein the total dry wt% of the components (A), (B) and (C) add up to 100 wt%.

6. Composition according to at least one of the preceding claims 1 to 5, wherein component (C) is selected from the group ethylene/vinyl acetate, polybutadiene, natural latexes, synthetic latexes, styrene-butadiene emulsions, or mixtures thereof; preferably wherein component (C) is natural latex or polybutadiene or mixtures thereof.

7. Composition according to at least one of the preceding claims 1 to 6, wherein the composition can comprise at least one further component selected from non-ionic surfactant, ionic surfactant, pH adjusting agent, preservative, dye, pigment, defoamer, thickener, waxes, wetting agent, plasticizers, or combinations thereof.

8. Composition according to at least one of the preceding claims 1 to 7, wherein the composition is a dry composition, preferably a powder or a granulate; or wherein the composition is a liquid composition comprising a solvent, such as an organic solvent or water, preferably wherein the composition is an aqueous emulsion, an aqueous suspension, an aqueous solution, an aqueous slurry or a mixture thereof.

9. Method of manufacturing the composition according to at least one of the preceding claims 1 to 8 comprising at least the following steps a) and b):
a) Performing sub-steps i,. ii., optionally iii.:
i.) Providing component (B) to a first reaction area;
ii.) Providing at least the monomers (A1) and (A2) to a second reaction area to obtain a monomer mixture; optionally combining the monomer mixture in the second reaction area with the mixture in the first reaction area; and copolymerizing said monomer mixture to obtain component (A); or provide component (A) directly;
iii.) optionally mixing the composition obtained in step i. and/or the composition obtained in step ii. to provide a first copolymer mixture;
b) Addition of component (C) to the first copolymer mixture obtained in step a); wherein optionally in any of steps a)i., a)ii., a)iii. or b) one or more additional components may be added to the respective mixtures.

10. Use of the composition as claimed in at least one of the claims 1 to 8 or as manufactured according to the method as claimed in claim 9 as oil-barrier and/or grease-barrier and/or water-barrier on a substrate; preferably, wherein the substrate is a cellulose based substrate, preferably paper or cardboard, or a substrate based on synthetic polymers, like nylon; or a substrate based on natural material, like wool; or a mixture of two or more of these substrates thereof.

11. Coated substrate, wherein the coat of the substrate comprises or consists of the composition as claimed in at least one of the claims 1 to 8 or as manufactured according to the method as claimed in claim 9; preferably wherein the substrate is a cellulose based substrate, preferably paper or cardboard, or a substrate based on synthetic polymers, like nylon; or a substrate based on natural material, like wool; or a mixture of two or more of these substrates thereof.

12. Coated substrate as claimed in claim 11, further comprising an overcoat selected from humidity barriers, oxygen barriers, heatsealings, gas barriers, esthetic overcoatings such as printing, varnish or to provide gloss, or combinations thereof.

13. Method of manufacturing a coated substrate as claimed in at least one of claims 11 or 12 comprising the following steps:
I) applying the composition as claimed in at least one of the claims 1 to 8 or as manufactured according to the method as claimed in claim 9 onto a substrate;
II) drying the composition as claimed in at least one of the claims 1 to 8 or as manufactured according to the method as claimed in claim 9 on the substrate.

14. Manufacturing method of an article comprising or consisting of the coated substrate as claimed in at least one of claims 11 or 12 or as manufactured according to the method as claimed in claim 13, wherein coated substrate is subjected to measures selected from the group comprising cut, fold, gluing, curing, dyeing, or combinations thereof.

15. Article comprising or consisting of the coated substrate as claimed in at least one of claims 11 or 12 or as manufactured according to the method as claimed in claim 13, or article manufactured according to the method as claimed in claim 14, wherein the article is a food container, plate, straw, bags, bowls, cloths, bags (made from paper or textile).
